Europäisches Patentamt

European Patent Office

Office européen des brevets

(19)

(11) Veröffentlichungsnummer: **0 007 480**
**B1**

(12) # EUROPÄISCHE PATENTSCHRIFT

(45) Veröffentlichungstag der Patentschrift: **13.05.81**

(51) Int. Cl.³: **A 47 B 47/02, F 16 B 12/40**

(21) Anmeldenummer: **79102259.3**

(22) Anmeldetag: **04.07.79**

(54) Bauteilsatz zur Erstellung von Regalen.

(30) Priorität: **06.07.78 DE 2829682**

(43) Veröffentlichungstag der Anmeldung:
**06.02.80 Patentblatt 80/3**

(45) Bekanntmachung des Hinweises auf die Patenterteilung:
**13.05.81 Patentblatt 81/19**

(84) Benannte Vertragsstaaten:
**AT CH DE FR GB IT**

(56) Entgegenhaltungen:
**DE - A - 1 654 571**
**DE - B - 1 249 478**
**DE - U - 7 027 533**
**FR - A - 2 236 450**
**US - A - 4 050 386**

(73) Patentinhaber: **Fritz Schäfer Gesellschaft mit beschränkter Haftung Fabriken für Lager- und Betriebseinrichtungen**
**Salchendorf bei Neunkirchen Kreis Siegen Fritz-Schäfer-Strasse 20**
**D-5908 Neunkirchen (DE)**

(72) Erfinder: **Schäfer, Gerhard**
**Oberes Gerstenfeld 2**
**D-5908 Neunkirchen (DE)**

(74) Vertreter: **Hemmerich, Friedrich Werner et al, Patentanwälte HEMMERICH-MÜLLER-GROSSE-POLLMEIER Berliner Allee 41**
**D-4000 Düsseldorf 1 (DE)**

EP 0 007 480 B1

Bauteilsatz zur Erstellung von Regalen

Die Erfindung betrifft einen Bauteilsatz zur Erstellung von Regalen, insbesondere mehrgeschossigen Regalen, mit aus Blechprofilen bestehenden Pfosten, die einen rechteckigen, vorzugsweise auf der ganzen Länge im Bereich einer Profilecke spaltartig offenen, beispielsweise G-förmigen, Querschnitt haben, und mit drei verschiedenen Ausführungsformen von Fachböden, nämlich Grund-, Zwischen- und Abdeckböden, die an jeder Ecke einen quer zu ihrer Eben gerichteten Stummel tragen, der mit zwei zueinander rechtwinkligen Flächen an den dazu parallelen Kantenflächen der Fachböden anleigt, wobei bei der einen Ausführungsform — dem Grundboden — die Stummel nur nach oben, bei der zweiten Ausführungsform — dem Abdeckboden — die Stummel nur nach unten und bei der dritten Ausführungsform — dem Zwischenboden — die Stummel nach oben und nach unten ragen und wobei die Pfosten mindestens an einem ihrer Enden in bestimmten Bereichen Profilausklinkungen haben, in die die Fachböden mit ihrer ganzen Bauhöhe eingreift, während die verbleibenden Stirnkanten der Pfostenenden bündig mit der oberen oder der unteren Kante des Fachbodens abschließen.

Durch das DE—U—70 27 533 gehört bereits eine Regaleinheit zum Stande der Technik, welche sich aus einem Bauteilsatz der gattungsgemäßen Art erstellen läßt. Derartige Regaleinheiten haben sich auch im praktischen Gebrauch bewährt. Ihr Charakteristikum liegt darin, daß die die einzelnen Regalpfosten bildenden Blechprofile nicht über die gesamte Bauhöhe der Regaleinheit einstückig durchgehen, sondern vielmehr nur eine Länge haben, die dem Abstand zwischen zwei übereinander liegenden Fachböden angepaßt ist. Damit jedoch die einzelnen Fachböden nur das Gewicht des auf ihnen selbst abgesetzten Lagergutes zu tragen haben, d.h., die Auflagergewichte aller im Abstand senkrecht übereinander angeordneter Fachböden unmittelbar durch die Regalpfosten in den Boden eingeleitet werden, wirken die die Regalpfosten bildenden Blechprofile mit den Stummeln der Fachböden so zusammen, daß ihre im Bereich der Profilausklinkungen verbleibenden, im Querschnitt im wesentlichen L-förmigen Profilbereiche im Eckbereich an dan Kantenflächen der Fachböden vorbeigehen, so daß ihre Stirnkanten mindestens bündig mit der oberen oder der unteren Kante des benachbarten Fachbodens abschließen, Hierdurch wird nämlich erreicht, daß der aus der Belastung der Regale resultierende Kraftfluß unmittelbar über die verbleibenden Stirnkanten der Pfostenenden, d.h. also unter Umgehung der einzelnen Fachböden, in den Boden eingeht.

Bei der durch das DE—U—70 27 533 bekanntgewordenen Ausführung eines Bauteilsatzes zur Erstellung von Regaleinheiten steht zur Übertragung des aus den Auflagerkräften resultierenden Kraftflusses in den Boden nur etwa die halbe Querschnittsfläche der die Pfosten bildenden Blechprofile zur Verfügung, weil deren übrige Querschnittsbereiche durch die vorgesehenen Profilausklinkungen entfernt sind.

Da es für hochbelastbare Regaleinheiten jedoch von wesentlicher Bedeutung ist, zur sicheren Beherrschung des aus den Auflagerkräften resultierenden Kraftflusses in Vertikalrichtung möglichst große Querschnittsflächen der die Pfosten bildenden Blechprofile verfügbar zu haben, liegt der Erfindung die Aufgabe zugrunde, eine Gestaltungsform für die Enden der die Pfosten bildenden Blechprofile und für die die Stummel tragenden Eckbereiche der einzelnen Fachböden zu finden, welche auch, die in den Bereich der Eckzone der Fachböden eingreifenden Querschnittsbereiche der Blechprofile für die Aufnahme des aus den Auflagerkräften resultierenden Kraftflusses weitestgehend wirksam macht.

Die Lösung dieser Aufgabe wird nach der Erfindung im wesentlichen dadurch erreicht, daß die Profilausklinkungen an den Pfostenenden sich jeweils nur über schmale Bereiche der beiden rechtwinklig zueinander liegenden und in die Eckzonen der Fachböden eingreifenden Profilwandungen erstrecken und zwischen sich einen im wesentlichen L-förmigen Profilabschnitt bzw. im wesentlichen J-förmigen Profilabschnitt begrenzen, und daß die Fachböden unmittelbar neben ihren Stummeln in den quer zu diesen gerichteten Flächen Ausnehmungen haben, welche Durchlässe für die im wesentlichen L-förmigen bzw. J-förmigen Profilabschnitte der Pfosten bilden.

Hierbei ist es besonders zweckmäßig, wenn die Ausnehmungen in den Flächen der Fachböden eine dem Profilabschnitt der Pfostenenden angepaßte Umrißform haben.

Wenn die Ausnehmungen in den Flächen der Fachböden sich über deren ganze Bauhöhe erstrecken, d.h., sowohl an den Oberals auch an den Unterseiten der Fachböden offen sind, ist es für die Wirksamkeit der erfindungsgemäßen Gestaltung wichtig, daß die Stirnkanten der im wesentlichen L-förmigen Profilabschnitte auf gleicher Ebene mit den verbleibenden Stirnkanten der außerhalb der Eckzonen der Fachböden befindlichen Querschnittsbereiche der Pfostenenden liegen.

Erstrecken sich jedoch die Ausnehmungen in den Flächen der Fachböden nur über einen Teil von der Bauhöhe, d.h., sind beispielsweise die Abdeckböden und die Zwischenböden an ihrer Oberseite geschlossen ausgebildet, dann ist es erfindungsgemäß von Bedeutung, daß die Stirnkanten der im wesentlichen J-förmigen Profilabschnitte gegenüber den verbleibenden Stirnkanten der Pfostenenden um die Materialdicke der Fachböden zurückversetzt sind.

Werden Fachböden benutzt, deren Begrenzungsränder durch L-förmig abgekantete Zargen gebildet sind, dann besteht eine weiterbildende Ausgestaltung nach der Erfindung darin, daß mindestens der Grundboden sowohl in seiner Bodenfläche als auch in dem dazu parallelen Zargenschenkel mit Ausnehmungen als Durchlässe für die im wesentlichen L-förmigen Profilabschnitte der Pfostenenden versehen ist.

Wenn bei einem Bauteilsatz zur Erstellung von Regaleinheiten die Stummel der Fachböden durch Punktschweißungen an den die Begrenzungsränder der Fachböden bildenden L-förmig abgekanteten Zargen befestigt sind, kann es sich ferner als vorteilhaft erweisen, die quer zur Bodenfläche gerichteten Zargenschenkel in der Nähe der Fachboden-Ecken jeweils mit zwei in entgegengesetzter Richtung gegen die Fachboden-Ebene geneigten Schlitzen zu versehen, in die an den Stummeln ausgebildete, entsprechend geneigt angeordnete Rastklappen verspannend einrückbar sind.

Schließlich kann es sich nach einem Weiterbildungsmerkmal noch als vorteilhaft erweisen, die innerhalb der Umrißlinien der Fachböden liegenden Wandungen der Stummel mit parallel zur Fachboden-Ebene abgebogenen Lappen zu versehen und über diese zusätzlich an den Fachböden zu verschweißen.

In der Zeichnung ist die Erfindung an einem Ausführungsbeispiel dargestellt. Dabei zeigt:

Figur 1 in schematisch vereinfachter Seitenansicht einen Teilabschnitt eines unter Benutzung erfindungsgemäßer Bauteilsätze erstellten, mehrgeschossigen Regals,

Figur 2 in größerem Maßstab und räumlicher Darstellung den in Figur 1 mit II gekennzeichneten Teilausschnitt,

Figur 3 einen Schnitt längs der Linie III—III in Figur 2,

Figur 4 in räumlicher Sprengdarstellung und Ansicht von innen die zu einem erfindungsgemäßen Bauteilsatz gehörenden wesentlichen Bauelemente und

Figur 5 teilweise im Schnitt und teilweise in Ansichtsdarstellung ein fertig montiertes, mehrgeschossiges Regal im Bereich eines Eckpfostens.

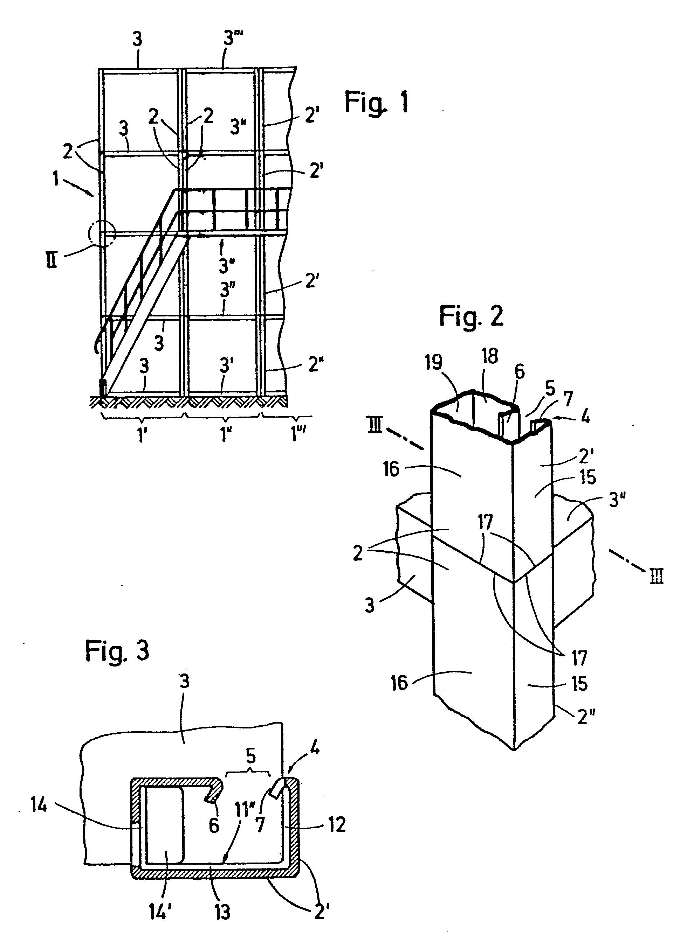

Das in Figur 1 gezeigte mehrgeschossige Regal 1 wird von mehreren nebeneinander stehenden Regaleinheiten 1', 1'', 1''' gleicher Bauart gebildet. Jede dieser Regaleinheiten 1', 1'', 1''' ist dabei aus vier Eckpfosten 2 und mehreren, beispielsweise fünf, Fachböden 3 zusammengesetzt.

Die einzelnen Eckpfosten 2 der Regaleinheit 1', 1'', 1''' werden dabei jeweils aus mehreren, beispielsweise vier, gleichartigen Blechprofilen 2' und 2'' zusammengesetzt, die einen rechteckigen Querschnitt haben, wie das besonders deutlich aus den Figuren 2 bis 4 ersichtlich ist. Vorzugsweise sind diese Blechprofile 2', 2'' durch mehrfaches Abkanten eines Blechstreifens geformt, und zwar derart, daß sie im Anschluß an eine Profilecke 4 auf der ganzen Länge eine spaltartige Öffnung 5 aufweist. Als besonders zweckmäßig hat es sich dabei gezeigt, wenn die die spaltartige Öffnung 5 begrenzenden Längskanten der Blechprofile 2' und 2'' spitzwinklig nach einwärts gebogen sind, so daß sie kurze, hakenartige Schenkel 6 und 7 bilden, derart, daß die Blechprofile 2' und 2'' etwa einen G-förmigen Querschnitt erhalten.

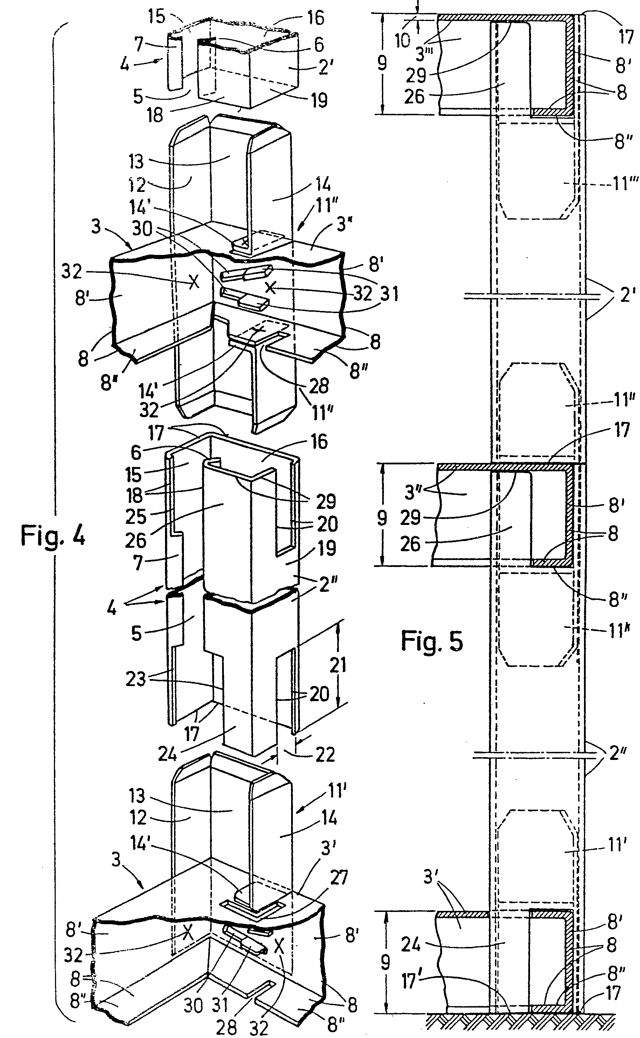

Aus den Figuren 4 und 5 ist ersichtlich, daß zur Bildung jeder der mehrgeschossigen Regaleinheiten 1', 1'', 1''' nach Figur 1 drei verschiedene Ausführungsformen von Fachböden 3 benötigt werden, nämlich ein Grundboden 3', Zwischenböden 3'' und ein Abdeckboden 3'''.

Sämtliche Fachböden 3, d. h., sowohl die Grundböden 3', die Zwischenböden 3'' und die Abdeckböden 3''' sind dabei aus Blech geformt und randseitig mit im wesentlichen L-förmig nach unten abgekanteten Verstärkungszargen 8 ausgestattet, derart, daß der Zargenschenkel 8' senkrecht zur Fachbodenebene und der daran anschließende Zargenschenkel 8'' parallel zur Fachbodenebene, und zwar nach einwärts, gerichtet ist. Dadurch erhalten die Fachböden 3 eine Bauhöhe 9, die einem Vielfachen der Materialdicke 10 des zu ihrer Herstellung verwenderen Bleches entspricht.

Die Grundböden 3' sind an jeder ihrer vier Ecken mit einem nach oben gerichteten Stummel 11' ausgestattet, der einen im wesentlichen U-förmigen Querschnitt hat, wobei die äußeren Querschnittsabmessungen dieser Stummel 11' den lichten Querschnittsabmessungen der Blechprofile 2' und 2'' angepaßt sind.

Die Stummel 11' sind so gestaltet, daß sie mit ihrem einen U-Schenkel 12 und dem rechtwinklig daran anschließenden U-Steg 13 jeweils in den Eckbereichen des Grundbodens 3' an den Außenflächen der senkrechten Zargenschenkel 8' anliegen und mit diesen fest verbunden werden können. Der zweite U-Schenkel 14 der Stummel 11' endet hingegen auf der Oberseite des Grundbodens 3' und hat einen rechtwinklig nach innen abgebogenen Lappen 14', der sich stützend auf die Oberseite des Grundbodens 3' auflegt, wie das deutlich aus Figur 4 ersichtlich ist.

Bei den Zwischenböden 3'' befindet sich ebenfalls im Bereich jeder Ecke ein Stummel 11'' von im wesentlichen U-förmigem Querschnitt. Dieser Stummel 11'' ragt dabei jedoch sowohl über die Oberseite als auch die Unterseite des Zwischenbodens 3'' um ein bestimmtes Maß hinaus. Er ist dabei ebenfalls so angeordnet, daß sein U-Schenkel 12 und sein U-Steg zum Zwecke der Befestigung am senkrechten Schenkel 8' der Verstärkingszarge 8 im Eckbereich anliegt, während sein zweiter U-Schenkel 14 mit nach einwärts abgewinkelten Lappen 14' einerseits auf der Oberseite des Zwischenbodens 3'' und andererseits auf der Unterseite des waagerechten Zargenschenkels 8″ anliegt, wie das aus Figur 4 hervorgeht.

Schließlich ist auch der Abdeckboden 3‴ an jeder seiner Ecken mit einem Stummel 11‴ ausgestattet. Diese Stummel 11‴ haben praktisch die gleiche Ausgestaltung wie die Stummel 11′ des Grundbodens 3′, sie sind jedoch so angeordnet, daß sie über die Unterseite des Abdeckbodens 3‴ vorstehen, und daß der abgewinkelte Lappen 14′ ihres U-Schenkels 14 stützend an der Unterseite des waagerechten Zargenschenkels 8″ zur Anlage kommt.

Wie besonders deutlich aus den Figuren 2 und 4 ersichtlich ist, sind die beiden rechtwinklig zueinander gerichteten Außenwände 15 und 16 der die Eckpfosten 2 bildenden Blechprofile 2′ und 2″ auf ihrer ganzen Länge, d.h. bis zu ihren Stirnkanten 17 hin glatt und ohne Unterbrechungen durchgehend ausgebildet. Im Gegensatz hierzu ist am Blechprofil 2″ die Profilwandung 19 im Bereich beider Enden mit Profilausklinkungen 20 versehen, deren Tiefe 21 der Bauhöhe 9 der Fachböden angepaßt ist, deren Breite 22 jedoch verhältnismäßig gering bemessen wird.

Am unteren Ende der Blechprofile 2″ ist die den Längsspalt 5 enthaltende Profilwandung 18 mit einer Ausklinkung 23 versehen, deren Tiefe ebenfalls gleich der Bauhöhe der Fachböden 3 ist, die aber nach beiden Seiten hin über die Breite des Längspaltes 5 vergrößert ist.

Zwischen den beiden Profilausklinkungen 20 und 23 am unteren Ende der Blechprofile 2″ bleibt damit ein im wesentlichen L-förmiger Profilabschnitt 24 stehen.

Am oberen Ende ist das Blechprofil 2″ im Bereich der Profilwandung 18 nur mit einer einseitigen Ausklinkung 25, und zwar durch Entfernung des zargenartig nach einwärts gebogenen Profilansatzes 7 versehen, do daß dort zwischen den beiden Ausklinkungen 20 und 25 ein im Querschnitt im wesentlichen J-förmiger Profilabschnitt 26 erhalten bleibt.

Das Blechprofil 2′ ist, wie Figur 4 erkennen läßt, an seinem unteren Ende nicht mit Ausklinkungen versehen. An seinem oberen Ende wiest es hingegen die gleichen Ausklinkungen 20 und 25 auf, wie das Blechprofil 2″. Auch dort bleibt also zwischen den beiden Ausklinkungen 20 und 25 ein im Querschnitt im wesentlichen J-förmiger Profilabschnitt 26 stehen.

Erwähnenswert ist noch, daß die unteren Stirnkanten des L-förmigen Profilabschnitts 24 am Blechprofil 2″ auf gleicher Ebene mit den Stirnkanten 17 liegen, während die Stirnkanten des im wesentlichen J-förmigen Profilabschnitts 26 an den oberen Enden der Blechprofile 2″ und 2′ gegenüber deren oberen Stirnkanten 17 um die Materialdicke 10 der Fachböden 3 bzw. der Zwischenböden 3″ und der Abdeckböden 3‴ zurückversetzt sind.

Damit nach dem Zusammenbau der Regaleinheiten eine optimale Einleitung der auf den einzelnen Fachböden 3 ruhenden Lasten über die Eckpfosten 2 in den Boden erreicht wird, werden die Profilabschnitte 24 und 26 der einzelnen Blechprofile 2′ und 2″ mit in den Kraftfluß einbezogen. Um das zu erreichen, ist der den Grundboden 3′ bildende Fachboden 3 in seiner Oberseite unmittelbar benachbart den U-Schenkel 14 der Stummel 11′ jeweils mit einer winkelförmigen Ausnehmung 27 versehen, welcher einen Durchlaß für den L-förmigen Profilabschnitt 24 des Blechprofiles 2″ bildet. Der untere Schenkel 8″ der Verstärkungszarge 8 hat gegen eine schlitzförmige Ausklinkung 28, durch die der eine Schenkel des L-förmigen Profilabschnitts bis zum Boden hindurchgreifen kann, wie das aus Figur 5 ersichtlich ist.

Der Zwischenboden 3″ und der Abdeckboden 3‴ weist lediglich die Ausklinkung 28 im unteren Schenkel 8″ der Verstärkungszarge 8 auf, so daß durch diese der eine Schenkel des im Querschnitt im wesentlichen J-förmigen Profilabschnitts 26 der Blechprofile 2″ und 2′ nach oben hindurchgreifen kann. Dabei legen sich die freien Stirnkanten 29 der im Querschnitt J-förmigen Profilabschnitte 26 gegen die Unterseite der Bodenfläche des Zwischenbodens 3″ bzw. des Abdeckbodens 3‴ stützend an, wie das der Figur 5 ebenfalls entnommen werden kann.

Es ist ohne weiteres klar, daß durch die zusätzlich in den Kraftfluß der Eckpfosten 2 einbezogenen Profilabschnitte 24 und 26 der Blechprofile die Stabilität beziehungsweise Belastbarkeit des gesamten Regalaufbaues wesentlich verbessert werden kann.

Abschließend sei noch erwähnt, daß sämtliche Fachböden 3 in der Nähe ihrer Ecken an demjenigen Zargenschenkel 8′, an welchem der Steg 13 der Stummel 11′ beziehungsweise 11″ beziehungsweise 11‴ zur Anlage kommt, jeweils mit zwei in entgegengesetzter Richtung gegen die Fachboden-Ebene geneigten Schlitzen 30 versehen werden können, welche Eingriffe für entsprechend geneigt angeordnete Rastklauen 31 bilden, die aus dem Steg 13 der Stummel 11′ beziehungsweise 11″ beziehungsweise 11‴, herausgeformt sind. Nachdem die Rastklauen 31 in die Schlitze 30 eingerückt sind, lassen sich die Stummel 11′, 11″, 11‴ parallel zur Ebene ihres Steges 13 in Richtung der Fachboden-Ebene verschieben, bis ihr Steg 12 an der Ecke des jeweiligen Fachbodens zur Anlage kommt. Dabei tritt eine Verspannung zwischen den Rastklauen 31 und den Schlitzen 30 ein, die eine Halteverbindung herstellt. Diese Halteverbindung entlastet dabei auch die an verschiedenen Stellen zwischen den Stummeln 11′, 11″, 11‴ und den Fachböden 3′, 3″, 3‴ zusätzlich hergestellten Punktschweißverbindungen 32 wesentlich entlastet.

Wie aus Figur 4 ersichtlich ist, sind solche Punktschweißverbindungen 32 jeweils an den Flanschen 12 und den Stegen 13 sowie an den abgewinkelten Lappen 14′ vorgesehen.

## Patentansprüche

1. Bauteilsatz zur Erstellung von Regalen, insbesondere mehrgeschossigen Regalen, mit aus Blechprofilen (2', 2'') bestehenden Pfosten (2), die einen rechteckigen, vorzugsweise auf der ganzen Länge im Bereich einer Profilecke (4) spaltartig offenen, beispielsweise G-förmigen, Querschnitt haben, und mit drei verschiedenen Ausführungsformen von Fachböden (3), nämlich Grund-, Zwischen- und Abdeckböden (3', 3'', 3'''), die an jeder Ecke einen quer zu ihrer Ebene gerichteten Stummel (11', 11'', 11''') tragen, der mit zwei zueinander rechtwinkligen Flächen (12, 13) an den dazu parallelen Kantenflächen der Fachböden (3) anliegt, wobei bei der einen Ausführungsform — dem Grundboden (3') — die Stummel (11') nur nach oben, bei der zweiten Ausführungsform — dem Abdeckboden (3''') — die Stummel (11''') nur nach unten und bei der dritten Ausführungsform — dem Zwischenboden (3'') — die Stummel (11'') nach oben und nach unten ragen und wobei die Pfosten (2), deren Länge dem Abstand zwischen zwei übereinanderliegenden Fachböden (3) angepaßt ist, mindestens an einem ihrer Enden in bestimmten Bereichen Profilausklinkungen (20, 23, 25) haben, in die die Fachböden (3) mit ihrer ganzen Bauhöhe eingreifen, während die verbleibenden Stirnkanten (17) der Pfostenenden bündig mit der oberen oder unteren Kante des Fachbodens (3) abschließen, dadurch gekennzeichnet, daß die Profilausklinkungen (20, 23 bzw. 20, 25) an den Pfostenenden sich jeweils nur über schmale Bereiche der beiden rechtwinklig zueinander liegenden und in die Eckzonen der Fachböden (3 bzw. 3', 3'', 3''') eingreifenden Profilwandungen (19 bzw. 18) erstrecken und zwischen sich einen im wesentlichen L-förmigen Profilabschnitt (24) bzw. im wesentlichen J-förmigen Profilabschnitt (26) begrenzen, und daß die Fachböden (3 bzw. 3', 3'', 3''') unmittelbar neben ihren Stummeln (11', 11'', 11''') in den quer zu diesen gerichteten Flächen Ausnehmungen (27 bzw. 28) haben, welche Durchlässe für die im wesentlichen L-förmigen beziehungsweise J-förmigen Profilabschnitte (24 bzw. 26) der Pfosten (2 bzw. 2', 2'') bilden.

2. Bauteilsatz nach Anspruch 1, dadurch gekennzeichnet, daß die Ausnehmungen (27 bzw. 28) in den Flächen der Fachböden (3 bzw. 3', 3'', 3''') eine dem Profilabschnitt (24 bzw. 26) der Pfostenenden angepaßte Umrißform haben.

3. Bauteilsatz nach den Ansprüchen 1 oder 2, dadurch gekennzeichnet, daß die Stirnkanten (17') der im wesentlichen L-förmigen Profilabschnitte (24) auf gleicher Ebene mit den verbleibenden Stirnkanten (17) der Pfostenenden liegen.

4. Bauteilsatz nach den Ansprüchen 1 oder 2, dadurch gekennzeichnet, daß die Stirnkanten (29) der im wesentlichen J-förmigen Profilabschnitte (26) gegenüber den verbleibenden Stirnkanten (17) der Pfostenenden um die Materialdicke (10) der Fachböden (3 bzw. 3', 3'', 3''') zurückversetzt sind.

5. Bauteilsatz nach den Ansprüchen 1 bis 4 mit Fachböden (3), deren Begrenzungsränder durch L-förmig abgekantete Zargen (8) gebildet sind, dadurch gekennzeichnet, daß mindestens der Grundboden (3') sowohl in seiner Bodenfläche als auch in dem dazu parallelen Zargenschenkel (8'') mit Ausnehmungen (27 und 28) als Durchlässe für die im wesentlichen L-förmigen Profilabschnitte (24) der Pfostenenden versehen ist.

6. Bauteilsatz nach den Ansprüchen 1 bis 5, bei dem die Stummel (11', 11'', 11''') an den Fachböden (3) durch Punktschweißungen (32) an den die Begrenzungsränder der Fachböden (3) bildenden L-förmig abgekanteten Zargen (8) befestigt sind, dadurch gekennzeichnet, daß die quer zur Bodenfläche gerichteten Zargenschenkel (8') in der Nähe der Fachboden-Ecken jeweils zwei in entgegengesetzter Richtung gegen die Boden-Ebene geneigte Schlitze (30) haben, in die an den Stummeln (11', 11'', 11''') ausgebildete, entsprechend geneigt angeordnete Rastklauen (31) verspannend einrückbar sind.

7. Bauteilsatz nach den Ansprüchen 1 bis 6, dadurch gekennzeichnet, daß die innerhalb der Umrißlinie der Fachböden (3 bzw. 3', 3'', 3''') liegenden Wandungen (14) der Stummel (11', 11'', 11''') mit parallel zur Fachboden-Ebene abgebogenen Lappen (14') versehen und über diese zusätzlich an den Fachböden (3 bzw. 3', 3'', 3''') verschweißt sind.

## Revendications

1. Jeu d'éléments de construction de rayonnages, notamment de rayonnages à plusieurs étages, avec des montants (2) constitués par des profilés en tôle (2', 2'') qui ont une section rectangulaire, par exemple en forme de G, de préférence ouverts en forme de fente sur toute longueur dans le champ d'un angle (4) de ces profilés, et avec des plateaux (3) selon trois formes d'exécution différentes, à savoir des plateaux de fond (3'), des plateaux intermédiaires (3'') et des plateaux de sommet (3''') qui, à chaque angle, portent un tenon (11', 11'', 11''') qui est dirigé en travers de leur plan et est en contact, par deux faces perpendiculaires l'une sur l'autre (12, 13), avec les faces de rive des plateaux (3) parallèles à ces deux faces, ces tenons étant, dans la forme d'exécution des plateaux de fond (3'), dirigés seulement vers le haut, dans la forme d'exécution des plateaux intermédiaires (3'') dirigés vers le haut et vers le bas, dans le forme d'exécution des plateaux de sommet (3''') dirigés seulement vers le bas, tandis que les montants (2), dont la longueur est adaptée à la distance entre deux plateaux (3) superposés, comportent au moins à l'une de leurs extrémités, dans des parties déterminées, des entailles (20, 23, 25) dans lesquelles pénètrent les plateaux sur toute leur hauteur d'installation, les arêtes restantes (17) des extrémités des montants affleurant les bords supérieurs et inférieurs des plateaux (3), ce jeu d'éléments de construction étant remarquable en ce que les entailles (20, 23, 25) ménagées dans les profilés aux extrémités des montants s'étendent seulement sur d'étroites parties des deux parois (19 et 18) perpendiculaires l'une sur l'autre et s'engageant dans les zones d'angle des plateaux (3', 3'', 3'''), ces entailles délimitant entre elles soit un tronçon de profilé (24) en forme générale de L, soit un tronçon de profilé (26) en forme générale de J, et en ce que les plateaux (3', 3'', 3''') présentent, juste à côté de leurs tenons (11', 11'', 11'''), dans les faces orientées en travers de ceux-ci, des entailles (27, 28) qui constituent des traversées pour les tronçons en forme de L (24) et de J (26) des montants (2', 2'').

2. Jeu d'éléments de construction selon la revendication 1, remarquable en ce que les entailles (27, 28) dans les faces des plateaux (3', 3'', 3''') ont un contour adapté à celui des tronçons (24, 26) des extrémités des montants.

3. Jeu d'éléments de construction selon la revendication 1 ou 2, remarquable en ce que les arêtes d'extrémité (17) des tronçons (24) en forme de L sont dans le même plan que les arêtes restantes des extrémités des montants.

4. Jeu d'éléments de construction selon la revendication 1 ou 2, remarquable en ce que les arêtes d'extrémité (29) des tronçons (26) en forme générale de J sont, par rapport aux arêtes d'extrémité restantes (17) des extrémités des montants, en retrait de l'épaisseur (10) de la mateîre des plateaux (3', 3'', 3''').

5. Jeu d'éléments de construction selon les revendications 1 à 4, avec des plateaux dont les rives sont formées par des rebords (8) repliés en forme de L, remarquable en ce qu'au moins le plateau de fond (3') comporte, tant dans son voile que dans les ailes (8'') des rebords parallèles à celui-ci, des entailles (27 et 28) formant des traversées pour les tronçons (24) en forme générale de lettre L des extrémités des montants.

6. Jeu d'éléments de construction selon les revendications 1 à 5, dans lequel les tenons (11', 11'', 11''') des plateaux (3) sont fixés par des points de soudure (32) aux rebords repliés (8) en forme de L qui forment les rives des plateaux (3), remarquable en ce que les ailes (8') des rebords dirigées en travers de la surface du plateau comportent à proximité de chacun des angles de celui-ci deux fentes (30) inclinées en sens opposés sur le plan du plateau et dans lesquelles peuvent être introduites sous contrainte des languettes d'arrêt (31) inclinées dans le même sens que les fentes (30) et formées sur les tenons (11', 11'', 11''').

7. Jeu d'éléments de construction selon les revendications 1 à 6, remarquable en ce que les parois (14) des tenons (11', 11'', 11''') situées dans le périmètre des plateaux (3', 3'', 3''') sont munies de pattes (14') repliées parallèlement au plan des plateaux et sont, par l'intermédiaire de celles-ci, soudées aux plateaux (3', 3'', 3''').

**Claims**

1. Set of structural parts for the erection of shelves, more especially multi-floor shelves, with posts (2) which consist of sheet metal section members (2', 2'') and which have a rectangular cross-section which is, for example, G-shaped and which is advantageously open in slot-like form over the full length in the region of a profiled corner (4), and which have three different constructional forms of the partition floors (3), namely, bottom, intermediate and top floors (3', 3'', 3'''), which carry at each corner a stub (11', 11'', 11'''), which extends transversely of their planes and which bears with two surfaces (12, 13) at right-angles to one another on those edge surfaces of the partition or shelf floors (3) which are parallel thereto and with which, as regards one constructional form — the bottom floor (3') — the stubs (11') only project upwardly; as regards the second constructional form — the top floor (3''') — the stubs (11''') only project downwardly and, as regards the third constructional form — the intermediate floor (3'') — the stubs (11'') project upwardly and downwardly, and with which the posts (2), of which the length is adapted to the spacing between two superposed partition floors (3), have profiled notches (20, 23, 25) in certain zones, at least at one of their ends, which notches are engaged by the partition floors (3) over their full structural height, while the remaining end edges (17) of the post ends terminate flush with the upper or lower edge of the partition floor (3), characterised in that the profiled notches (20, 23 or 29/25) on the post ends are in each case only extended over narrow regions of the two profiled walls (19 or 18), which lie at right-angles to one another and which engage in the corner zones of the partition floors (3 or 3', 3'', 3''') and define between them a substantially L-shaped profile section (24) or respectively a substantially J-shaped profiled section (26), and that the said floors (3 or 3', 3'', 3''') have recesses (27 or 28) immediately adjacent their stubs (11', 11'', 11''') in the surfaces directly transversely of the latter, which recesses form passages for the substantially L-shaped or J-shaped profile sections (24 or 26) of the posts (2 or respectively 2', 2'').

2. Set of structural parts according to claim 1, characterised in that the recesses (27 or 28) in the surfaces of the partition floors (3 or 3', 3'', 3''') have a contour form adapted to the profile section (24 or 26) of the post ends.

3. Set of structural parts according to claim 1 or 2, characterised in that the frontal edges (17') of the substantially L-shaped profile sections (24) are disposed on the same plane as the remaining frontal edges (17) of the post ends.

4. Set of structural parts according to claim 1 or 2, characterised in that the frontal edges (29) of the substantially J-shaped profile sections (26) are set back by the material thickness (10) of the partition floors (3 or 3', 3'', 3''') relatively to the remaining frontal edges (17) of the post ends.

5. Set of structural parts according to claims 1 to 4, with partition floors (3), of which the bounding edges are formed by side arms (8) with an L-shaped chamfering, characterised in that at least the base floor (3') is provided, both in its bottom surface and also in the side arm (8'') which is parallel thereto, with recesses (27 and 28) as openings or passages for the substantially L-shaped profile sections (24) of the post ends.

6. Set of structural parts according to claims 1 to 5, with which the stubs (11', 11'', 11''') on the partition floors (3) are secured by spot welds (32) on the side plates (8), which are bent over to L-shape and form the bounding edges or rims of the said floors (3), characterised in that those side arms (8') which are directed transversely of the base surface are respectively provided in the vicinity of the corners of the partition floors with two slots (30), inclined in an opposite direction relatively to the plane of the floor, in which slots can be engaged latching claws (31), which are arranged with a corresponding slope and are formed on the stubs (11', 11'', 11'''), with a bracing or clamping action.

7. Set of structural parts according to claims 1 to 6, characterised in that those walls (14) of the stubs (11', 11'', 11''') lying within the contour line of the partition floors (3 or 3', 3'', 3''') are provided with lugs (14'), which are bent over parallel to the plane of the partition floors and are additionally welded by means of the said lugs to the floors (3 or 3', 3'', 3''').

Fig. 1

Fig. 2

Fig. 3

0 007 480

Fig. 4

Fig. 5